# EUROPÄISCHE PATENTSCHRIFT

(11) **EP 1 273 423 B1**
(45) Veröffentlichungstag und Bekanntmachung des Hinweises auf die Patenterteilung: **22.09.2004**
(21) Anmeldenummer: 02012868.2
(22) Anmeldetag: 11.06.2002
(51) Int. Cl.: B29C 45/64, B29C 45/17

(54) **Formaufspannplatte für eine Spritzgiessmaschine**
Mould support platen for injection moulding machine
Plaque de fixation de moule pour une presse à injecter

(30) Priorität: 06.07.2001 DE 10132970
(43) Veröffentlichungstag der Anmeldung: 08.01.2003
(73) Patentinhaber: Mannesmann Plastics Machinery GmbH, 80997 München (DE)
(72) Erfinder: Becker, Klaus, Dr., 58300 Wetter (DE); Legewie, Guido, Dr., 44627 Herne (DE)
(74) Vertreter: Zollner, Richard, Dipl.-Phys.

(56) Entgegenhaltungen:
- DE-A- 19 855 663
- US-A- 6 027 329
- PATENT ABSTRACTS OF JAPAN vol. 1997, no. 02, 28. Februar 1997 (1997-02-28) & JP 08 267463 A (MITSUBISHI HEAVY IND LTD), 15. Oktober 1996 (1996-10-15)
- PATENT ABSTRACTS OF JAPAN vol. 011, no. 330 (M-636), 28. Oktober 1987 (1987-10-28) & JP 62 111710 A (TOSHIBA CORP), 22. Mai 1987 (1987-05-22)

## Beschreibung

Die Erfindung betrifft eine Formaufspannplatte einer Spritzgießmaschine gemäß dem Oberbegriff des Anspruchs 1.

Aus dem US-Patent 5,593,711 ist eine Formaufspannplatte einer Kunststoffspritzgießmaschine bekannt, die im wesentlichen aus einer Grundplatte, einem kegelstumpfförmigen Mittelteil und einer parallel zu der Grundplatte verlaufenden Vorderplatte zur Aufnahme des Formwerkzeuges aufgebaut ist. Die Grundplatte ist in ihren Eckbereichen mit Bohrungen für die Aufnahme von vier Holmen einer Spritzgießmaschine versehen. Das als Hohlkörper ausgebildete kegelstumpfförmige Mittelteil ist mit seiner Basis mittig auf der Grundplatte angeordnet. An der Stumpfspitze des Mittelteils schließt sich die Vorderplatte für das Formwerkzeug an. Die Vorderplatte wird somit nur in ihrem Zentralbereich von dem Mittelteil unterstützt. Diese Ausbildung der Formaufspannplatte soll ermöglichen, dass die Vorderplatte des Formwerkzeuges auch unter der Schließkraft der Spritzgießmaschine eben bleibt, wodurch ein Aufklaffen der Formwerkzeughälften verhindert werden soll.

Des Weiteren ist aus der europäischen Patentschrift EP 0 789 648 B1 eine Spritzgießmaschine mit einem im wesentlichen C-förmigen Maschinenrahmen mit zwei nicht über Holme verbundenen Rahmenschenkeln bekannt. An einem Rahmenschenkel ist eine ortsfeste Formaufspannplatte gelagert; an dem anderen Rahmenschenkel ist eine Flanschplatte einer Schließeinrichtung befestigt. Die Schließeinrichtung besteht im wesentlichen aus einer hydraulischen Kolben-/Zylindereinheit und bewegt die verschiebbar auf dem Maschinenrahmen abgestützte bewegbare Formaufspannplatte. Die Flanschplatte und die ortsfeste Formaufspannplatte sind jeweils über sogenannte Halteteile an den Rahmenschenkeln des Maschinenrahmens befestigt. Während des Schließvorganges werden die Halteteile der Flanschplatte auf Zug und die der ortfesten Formaufspannplatte auf Druck beansprucht. Die Halteteile sind funktionsmäßig vergleichbar mit Federn, deren Elastizität geringer als die des Maschinenrahmens ist. In einer Ausführungsform sind mehrere Haltelemente vorgesehen, die über die Höhe der ortsfesten Formaufspannplatte und der Flanschplatte verteilt sind und eine jeweils voneinander abweichende Elastizität aufweisen, wobei die unteren Halteteile eine größere Elastizität als die oberen Halteteile haben. Die Halteteile sind als Körper aus Federstahl ausgebildet, die durch Einbringen von Schlitzen geschwächt werden. Im unteren Abschnitt sind hierbei mehr oder tiefere Schlitze vorgesehen, um entsprechend die Elastizität zu erhöhen. Wenn die Rahmenschenkel des Maschinenrahmens nun beim Spritzvorgang oben auseinandergedrückt werden, so können die ortsfeste Formaufspannplatte und die Flanschplatte eine Kippbewegung relativ zum Maschinenrahmen durchführen, wodurch die Plattenparallelität zwischen den Formaufspannplatten erhalten bleiben soll. Die Halteelemente bilden somit ein achsloses Gelenk, das neben Rotationsbewegungen auch translatorische Bewegungen zulassen soll.

Ferner beschreibt die europäische Patentanmeldung EP 0 381 107 B1 eine Schließeinrichtung für eine horizontale Zwei-Platten-Spritzgießmaschine für Kunststoff. Entsprechend weist die Spritzgießmaschine eine feststehende Formaufspannplatte sowie eine bewegliche Formaufspannplatte auf, an deren einander zugewandten Seiten jeweils Hälften eines Formwerkzeuges aufgespannt sind. Die feststehende und im wesentlichen rechteckförmige Formaufspannplatte ist über vier in den Ecken eines gedachten Viereckes angeordnete Spindeln mit der beweglichen Formaufspannplatte verbunden. Die Spindeln sind hierbei drehfest und freitragend an der feststehenden Formaufspannplatte angeordnet. Die bewegliche Formaufspannplatte ist zum Schließen und Öffnen der Formwerkzeuge über entsprechend in ihren Ecken angeordnete Spindeln und entlang der Spindeln auf die feststehende Formaufspannplatte zu und von dieser weg bewegbar. Für den Antrieb der beweglichen Formaufspannplatte ist an deren der Aufspannfläche für das Formwerkzeug abgewandten Seite je Spindel jeweils eine Spindelmutter befestigt, die alle gemeinsam über einen Antrieb, vorzugsweise einen Elektromotor, synchron drehbar sind. Die Spindelmutter ist als Kugelgewindemutter ausgebildet. Nach dem Schließen der Formwerkzeuge erfolgt das Aufbringen der Schließkraft auf die Hälften des Formwerkzeuges über eine neben dem Elektromotor zusätzlich an die Spindeln bzw. die Spindelmuttern angreifende hydraulische Kolben-/Zylindereinheit. Die Kolben-/Zylindereinheit weist einen Ringkolben auf, durch den die jeweilige Spindel geführt ist. Um auch ein Aufreißen der Hälften des Formwerkzeuges nach dem erfolgten Spritzvorgang zu ermöglichen, ist die Kolben-/Zylindereinheit doppelwirkend ausgebildet.

Wenn sich bei dieser Zwei-Platten-Spritzgießmaschine unter dem Schließdruck die Formaufspannplatten neigen oder verformen, werden diese Verformungen auf die in den Öffnungen der Formaufspannplatte geführten Spindeln übertragen. Dort führen diese zu ungewollten Biegebelastungen der Spindeln, so daß unter Betriebsbelastung die Spindeln dann nicht mehr parallel zueinander bzw. zur Maschinenachse der Spritzgießmaschine ausgerichtet sind. Die Spindel und/oder Spindeltriebe werden hierdurch einem erhöhtem Verschleiß unterworfen, der von einer Herabsetzungen deren Lebensdauer bis zu deren Zerstörung führen kann.

Aus der gattungsbildenden US 6,027,329 ist eine Formaufspannplatte einer Spritzgießmaschine bekannt, die Öffnungen für die Aufnahme von Säulen aufweist, wobei die Formaufspannplatte aus einem plattenförmigen Zentralbereich und die Öffnungen umschließenden Hülsen aufgebaut ist. Die Hülsen sind über flexible, im wesentlichen plattenförmige Verbindungselemente mit einem Mittelteil verbunden, der den plattenförmigen Zentralbereich für die Aufnahme eines Formwerkzeugs trägt. Bei dieser Formaufspannplatte sind die Hülsen also nicht direkt in einer Ebene elastisch mit dem das Formwerkzeug tragenden Teil der Formaufspannplatte verbunden, sondern über eine flexible Struktur, die sich im wesentlichen hinter dem das Formwerkzeug tragenden Teil der Formaufspannplatte befindet und die über ein Mittelteil mit dem das Formwerkzeug tragenden Teil der Formaufspannplatte verbunden ist. Nachteilig an dieser Formaufspannplatte ist, dass sie vergleichsweise aufwändig zu realisierten ist.

Hiervon ausgehend liegt der vorliegenden Erfindung die Aufgabe zugrunde, eine konstruktiv einfache Formaufspannplatte einer Spritzgießmaschine zu schaffen, die eine Übertragung der aus einer Verformung der Formaufspannplatte resultierenden Momente auf die säulenartigen Halte- und/oder Führungselemente einer Spritzgießmaschine minimiert.

Diese Aufgabe wird durch eine Formaufspannplatte mit den Merkmalen des Anspruches 1 gelöst. Vorteilhafte Ausgestaltungen der Erfindung sind in den Ansprüchen 2 bis 9 angegeben.

Erfindungsgemäß wird bei einer Formaufspannplatte einer Spritzgießmaschine, insbesondere für Kunststoff, mit Öffnungen für die Aufnahme von säulenartigen Halte- und/oder Führungselementen einer Spritzgießmaschine, eine elastische Befestigungsmöglichkeit für eine Verbindung der Formaufspannplatte an den Halte- und/oder Führungselementen, dadurch erreicht, daß die Formaufspannplatte aus einem plattenförmigen Zentralbereich und die Öffnungen umschließende Hülsen aufgebaut ist und die Hülsen derart über Verbindungselemente an dem Zentralbereich befestigt sind, dass ein flexibles Biege-/Torsionsgelenk gebildet wird. Diese Trennung der Formaufspannplatte in einen steifen Zentralbereich und hieran elastisch gelagerten Hülsen sowie die einteilige Ausbildung des Zentralbereichs und der Hülsen, vorzugsweise als Stahlgußteil, erweist sich konstruktiv als sehr einfach. Unter Schließdruck werden die Stege und die Bolzen auf Torsion und auf Biegung beansprucht. Im Bereich des flexiblen Gelenkes brauchen dann die Deckplatten aus dem Zentralbereich nicht weitergeführt zu werden, da diese dort nicht mehr zur Abtragung der Lasten benötigt werden. Somit kann das Gewicht der Formaufspannplatte reduziert werden.

Derartige Formaufspannplatten eignen sich für einen Einsatz in holmlosen Kunststoffspritzgießmaschinen, wobei die Formaufspannplatten dann über in die Öffnungen der Hülsen eingesteckte Halte- und/oder Führungselemente mit dem zumeist u-förmigen Maschinenrahmen verbunden werden. Durch diese achsgelenklose Aufhängung der Formaufspannplatten kann dann erfolgreich vermieden werden, daß in Folge der Schließkraft ein Nachgeben der Schenkel des u-förmigen Maschinenrahmens zu einer Auflösung der Parallelität der Formaufspannplatten führt. Auch sind diese Formaufspannplatten bei sogenannten Drei-Platten-Spritzgießmaschinen einsetzbar.

In konstruktiver Ausgestaltung werden die elastischen Verbindungselemente aus Stegen und Bolzen gebildet. Die Stege sind hierbei an dem im wesentlichen rechteckförmigen Zentralbereich in seinen Eckbereichen angeordnet, erstrecken sich nach außen und begrenzen paarweise einen u-förmigen Bereich. Der Bolzen ist zwischen den Stegen angeordnet und die Hülse exzentrisch an dem Bolzen befestigt. Hierbei sind vorteilhafterweise die Hülse mit ihrer Längsrichtung und der Bolzen mit seiner Längsrichtung rechtwinklig zueinander sowie jeweils rechtwinklig zu der Oberfläche des Zentralbereiches ausgerichtet.

In bevorzugter Ausbildung ist der Bolzen mit seinen Enden an den einander zugewandten Innenseiten der einander zugewandten Stege befestigt und die Hülse in der Mitte des Bolzens auf dessen dem Zentralbereich zugewandten Seite befestigt ist. Um die Kontaktfläche zwischen der Hülse und dem Bolzen zu vergrößern, taucht die in den Bolzen ein. Die Hülsen sind mit ihrer dem Zentralbereich zugewandten Außenoberfläche über einen Durchgangsbereich von dem Zentralbereich getrennt, der vorzugsweise als sichelförmige Öffnung ausgebildet ist.

In konstruktiv besonders einfacher Weise ist die Formaufspannplatte mit dem Zentralbereich und den Hülsen einteilig als Stahlgußteil ausgebildet.

Um die Hülse, den Bolzen und den Steg kerbfreundlich miteinander zu verbinden, sind zwischen dem Steg und dem Bolzen sowie zwischen dem Bolzen und der Hülse jeweils gerundete Übergänge angeordnet.

Die Formaufspannplatte weist vorteilhafterweise einen im wesentlichen rechteckförmigen Zentralbereich, der aus einer innenliegenden Rippenstruktur mit beidseitigen Deckplatten aufgebaut ist. Die Rippenstruktur weist einen zentralen Ring auf, an dem sich sternförmig Y-förmige Verbindungsstege anschließen, deren Enden über Randstege verbunden sind. Durch diesen Aufbau der Formaufspannplatte kann über eine Variation der Höhe und der Positionierung der Rippenstruktur die Steifigkeit der Formaufspannplatte je nach Einsatzfall angepasst werden und somit die Eigendurchbiegung der Formaufspannplatte während des Spritzvorganges minimiert werden. Dies führt auch zu einer Schonung der Spritzwerkzeuge

Bevorzugt sind derartige Formaufspannplatten für Zwei-Platten-Spritzgießmaschinen verwendbar. Die Spritzgießmaschine weist hierbei eine auf einem Maschinenrahmen angeordnete feststehende Formaufspannplatte und eine beweglichen Formaufspannplatte auf. Die Platten sind mit einer mehrere Spindeltriebe mit Spindeln aufweisenden Schließeinheit zum Öffnen und Schließen versehen. Diese Spindeln erstrecken sich in Richtung der bewegbaren Formaufspannplatte und durch die Eckbereiche der bewegbaren Formaufspannplatte sowie hieran befestigte Spindelmuttern hindurch. Diese Spindelmuttern sind über einen Antrieb drehbar, um die an den Formaufspannplatten befestigten Formwerkzeuge zu öffnen und zu schließen. Die Spindeltriebe sind vorzugsweise als Kugelgewindetriebe ausgebildet.

Nachfolgend wird die vorliegende Erfindung an Hand von einem in einer Zeichnung dargestellten Ausführungsbeispiel näher erläutert. Es zeigen:
- Figur 1: eine Ansicht auf eine Vorderseite einer teilweise im Aufriß dargestellten Formaufspannplatte und
- Figur 2: eine Seitenansicht einer entlang der Schnittlinie I-I in Figur 1 geschnittenen Formaufspannplatte.

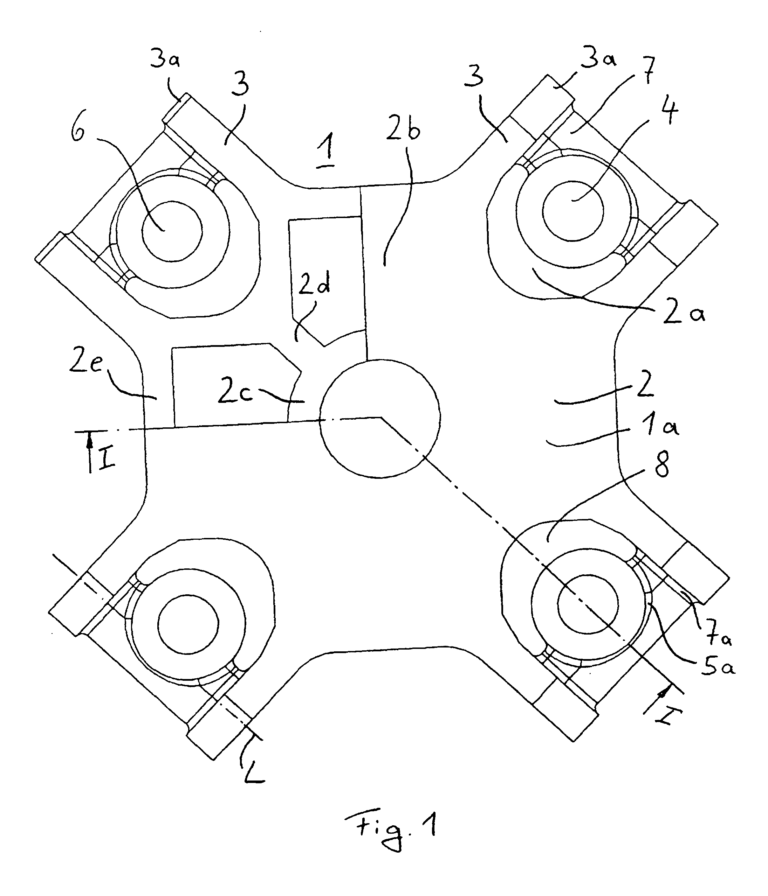

Die Figur 1 zeigt eine Ansicht auf eine Vorderseite einer Formaufspannplatte 1, die teilweise im Aufriß dargestellt ist, um deren inneren Aufbau zu verdeutlichen. Es ist ersichtlich, daß die Formaufspannplatte 1 aus einem im wesentlichen rechteckförmigen Zentralbereich 2 besteht, der in seinen Eckbereichen 2a jeweils in zwei u-förmig zueinander angeordnete Stege 3 übergeht. Die freien Enden 3a der flachprofilförmigen Stege 3 sind von dem Zentralbereich 2 weggerichtet und der von den Stegen 3 und dem Eckbereich 2a des Zentralbereiches 2 begrenzte u-förmige Bereich 4 ist nach außen, d.h. ebenfalls von dem Zentralbereich weggerichtet, geöffnet.

In jedem der vier u-förmigen Bereiche 4 sind Hülsen 5 angeordnet, die Öffnungen 6 aufweisen, in die säulenartige Halte- und/oder Führungselemente (nicht dargestellt) einer Spritzgießmaschine einführbar sind. Die Längsrichtung I der Hülsen 5 ist rechtwinklig zu der Oberfläche 1a der Formaufspannplatte 1 ausgerichtet. Hierbei sind die Hülsen 5 jeweils im Bereich ihrer Mitte über einen Bolzen 7, der vorzugsweise als Vollzylinder ausgebildet ist, mit den gegenüberliegenden freien Enden 3a der Stege 3 verbunden. Die Längsrichtung L der Bolzen 7 ist rechtwinklig zu der Oberfläche 1a der Formaufspannplatte 1 und zu der Längsrichtung I der Hülsen 5 ausgerichtet. Auch ist die Hülse 5 exzentrisch zu dem Bolzen 7 angeordnet, d. h. die Längsrichtungen L und I sind seitlich voneinander beabstandet. Der Bolzen 7 ist mit seinen Enden an den einander zugewandten Innenseiten der Stege 3 angeordnet. Außerdem taucht für eine großflächige Verbindung der Hülse 5 mit dem Bolzen 7, diese etwa zu 2/3 in den Bolzen 7 und somit etwa mit der Hälfte ihres Durchmessers. Die Übergänge 5a und 7a zwischen den freien Enden 3a der Stege und dem Bolzen 7 sowie dem Bolzen 7 und der Hülse 5 sind kerbfreundlich als Radien ausgebildet. Durch diese Art der Verbindung der Hülsen 5 mit dem Zentralbereich sind die Hülsen 5 jeweils im Bereich ihrer dem Zentralbereich 2 zugewandten Seite über einen Durchgangsbereich 8 in Form einer sichelförmigen Öffnung von dem Zentralbereich 2 der Formaufspannplatte 1 getrennt. Die Länge des Durchgangsbereich 8 beträgt in Bezug auf den Mittelpunkt der Hülse 5 gesehen etwa 180°. Der Durchgangsbereich 8 wird an seinen Enden jeweils durch den Bolzen 7 begrenzt.

Durch die Ausbildung der Stege 3 und die Art der Aufhängung der Hülsen 5 über die Bolzen 7 ragen die Hülsen 5 nur etwa mit einem Viertel ihres Durchmessers aus der gedachten Rechteckkontur des Zentralbereiches 2 heraus.

Die Stege 3 und der Bolzen 7 bilden eine elastisch nachgiebige Verbindung der Hülsen 5 mit dem Zentralbereich 2, so daß in Folge der Schließkraft auftretende Auslenkungen der Formaufspannplatten 1 nur abgeschwächt an die Hülsen 5 weitergegeben werden. Hierbei werden die Stege 3 und der Bolzen 7 auf Torsion und auf Biegung beansprucht. Die Elastizität der Stege 3 und der Bolzen 7 wird so gewählt, daß unter Einwirkung der säulenartigen Halte- und/oder Führungselementen einer Spritzgießmaschine sowie der Flächenlasten auf der Werkzeugseite der Formaufspannplatte 1 nicht nur die Halte- und/oder Führungselementen parallel zueinander bleiben, sondern auch der Zentralbereich 2 der Formaufspannplatte 1 nahezu eben bleibt. Die Halte- und/oder Führungselemente werden somit kaum noch auf Biegung beansprucht.

Des weiteren ist der Figur 1 zu entnehmen, daß der Zentralbereich 2 der Formaufspannplatte 1 in Leichtbauweise mit einer oberen und einer unteren Deckplatte 2b ausgebildet ist, die über eine zwischen den Deckplatten 2b angeordnete Rippenstruktur verstärkt wird. Die Rippenstruktur setzt sich im wesentlichen - in der Draufsicht gesehen - aus einen zentralen Ring 2c, Y-förmigen Verbindungsstegen 2d und Randstegen 2e zusammen. Vier von den Y-förmigen Verbindungsstegen 2d sind sternförmig gleichmäßig auf den Umfang verteilt mit ihrem Fußteil an dem Ring 2c befestigt. Die gabelförmigen Enden der Y-förmigen Verbindungsstege 2d sind mit den unterhalb der Randbereiche der Deckplatten 2a angeordneten Randstege 2e verbunden. Demnach weist der Zentralbereich 2 eine viereckige Außenkontur mit eingezogenen Eckbereichen 2a im Bereich der Y-förmigen Verbindungsstegen 2d auf. Im Verbindungsbereich der Y-förmigen Verbindungsstege 2d mit den Randstegen 2e schließen sich auch die Stege 3 an.

Der Aufbau der Formaufspannplatten 1 mit der Rippenstruktur und den über die Stege 3 und den Bolzen 7 hiermit verbundenen Hülsen 5 eignet sich insbesondere für eine einstückige Ausbildung der Formaufspannplatten 1 als Gußteil, vorzugsweise Stahlgußteil. Die Formaufspannplatte 1 kann somit konstruktiv besonders einfach hergestellt werden.

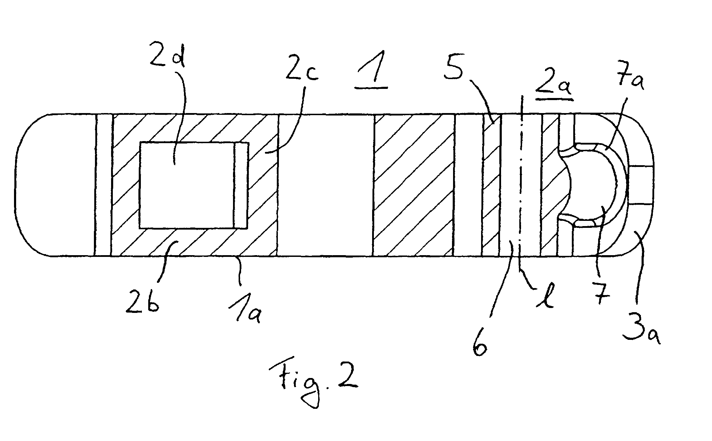

Die weitere Figur 2 zeigt eine Seitenansicht einer entlang der Schnittlinie I-I in Figur 1 geschnittenen Formaufspannplatte 1. Aus dieser Figur ist klar der Aufbau der Rippenstruktur der Formaufspannplatte 1 mit den Deckplatten 2a, dem Ring 2b, den Verbindungstegen 2c und den Randstegen 2d zu erkennen. Des weiteren ist gezeigt, daß die Längsrichtung I der Hülse 5 rechtwinklig zur Oberfläche des Zentralteils 2 verläuft. Auch ist der radienförmige Übergang 7a zwischen dem Bolzen 7 und Steg 3 deutlich entnehmbar.

Die vorbeschriebene Formaufspannplatte 1 eignet sich für einen Einsatz in einer horizontalen Zwei-Platten-Spritzgießmaschine für Kunststoffe. Eine derartige Spritzgießmaschine weist üblicherweise eine feststehende Formaufspannplatte 1 und eine über eine Schließeinheit bewegliche Formaufspannplatte 1 auf. Die Schließeinheit kann in den Eckbereichen einer Formaufspannplatte 1 angeordnete, feststehende Spindeln aufweisen, entlang dieser die andere Formaufspannplatten 1 über hieran befestigte Kugelgewindetriebe bewegbar ist.

### Bezugszeichenliste

- 1: Formaufspannplatte
- 1a: Oberfläche von 1
- 2: Zentralbereich
- 2a: Eckbereich
- 2b: Deckplatte
- 2c: Ring
- 2d: Verbindungssteg
- 2e: Randsteg
- 3: Steg
- 3a: freies Ende
- 4: u-förmiger Bereich
- 5: Hülse
- 5a: Übergang
- 6: Öffnung
- 7: Bolzen
- 7a: Übergang
- 8: Durchgangsbereich
- I: Längsrichtung der Hülse 5
- L: Längsrichtung des Bolzens 7

## Patentansprüche

1. Formaufspannplatte einer Spritzgießmaschine, insbesondere für Kunststoff, mit Öffnungen für die Aufnahme von säulenartigen Halte- und/oder Führungselementen einer Spritzgießmaschine, wobei
die Formaufspannplatte (1) aus einem plattenförmigen Zentralbereich (2) und die Öffnungen (6) umschließenden Hülsen (5) aufgebaut ist und wobei die Hülsen (5) derart über Verbindungselemente an dem Zentralbereich (2) befestigt sind, daß die Verbindungselemente ein flexibles Biege-/Torsionsgelenk bilden,
**dadurch gekennzeichnet, daß**
die Verbindungselemente aus Stegen (3) und Bolzen (7) bestehen, die Stege (3) an dem im wesentlichen rechteckförmigen Zentralbereich (2) in seinen Eckbereichen (2a) angeordnet sind, sich nach außen erstrecken und paarweise einen u-förmigen Bereich (4) begrenzen, der Bolzen (7) zwischen den Stegen (3) angeordnet ist und an dem Bolzen (7) die Hülse (5) befestigt ist.

2. Formaufspannplatte nach Anspruch 1, **dadurch gekennzeichnet, daß** der Bolzen (7) exzentrisch an der Hülse (5) angeordnet ist

3. Formaufspannplatte nach Anspruch 1 oder 2, **dadurch gekennzeichnet, daß** die Hülse (5) mit ihrer Längsrichtung (I) und der Bolzen (7) mit seiner Längsrichtung (L) rechtwinklig zueinander sowie jeweils rechtwinklig zu der Oberfläche (1a) des Zentralbereiches (2) ausgerichtet sind.

4. Formaufspannplatte nach einem der Ansprüche 1 bis 3, **dadurch gekennzeichnet, daß** der Bolzen (7) mit seinen Enden an den einander zugewandten Innenseiten der einander zugewandten Stege (3) befestigt ist und die Hülse (5) in der Mitte des Bolzens (7) auf dessen dem Zentralbereich (2) zugewandten Seite befestigt ist.

5. Formaufspannplatte nach Anspruch 4, **dadurch gekennzeichnet, daß** die Hülse (5) in den Bolzen (7) eintaucht.

6. Formaufspannplatte nach Anspruch 4 oder 5, **dadurch gekennzeichnet, daß** die Hülsen (5) mit ihrer dem Zentralbereich (2) zugewandten Außenoberfläche über einen Durchgangsbereich (8) von dem Zentralbereich (2) getrennt sind.

7. Formaufspannplatte nach einem der Ansprüche 1 bis 6, **dadurch gekennzeichnet, daß** die Formaufspannplatte (1) mit dem Zentralbereich (2) und den Hülsen (5) einteilig als Stahlgußteil ausgebildet ist.

8. Formaufspannplatte nach einem der Ansprüche 1 bis 7, **dadurch gekennzeichnet, daß** zwischen dem Steg (3) und dem Bolzen (7) sowie zwischen dem Bolzen (7) und der Hülse (5) jeweils gerundete Übergänge (5a, 7a) angeordnet sind.

9. Formaufspannplatte nach einem der Ansprüche 1 bis 8, **dadurch gekennzeichnet, daß** der im wesentlichen rechteckförmige Zentralbereich (2) aus einer innenliegenden Rippenstruktur mit beidseitigen Deckplatten (2a) aufgebaut ist und die Rippenstruktur aus einem zentralen Ring (2b), an dem sich sternförmig Y-förmige Verbindungsstege (2c) anschließen, deren Enden über Randstege (2d) verbunden sind.

## Claims

1. A mould-clamping platen of an injection moulding machine, in particular for plastic, having openings for housing column-type retention and/or guide elements of an injection moulding machine, wherein the mould-clamping platen (1) consists of a plate-shaped central region (2) and sleeves (5) enclosing the openings (6) and wherein the sleeves (5) are fixed via connecting elements to the central region (2) in such a manner that the connecting elements form a flexible bending/torsion joint,
**characterised in that** the connecting elements consist of webs (3) and bolts (7), the webs (3) are disposed at the substantially rectangular central region (2) in its corner regions (2), extend outwards and in pairs limit a U-shaped region (4), the bolt (7) is disposed between the webs (3) and the sleeve (5) is fixed at the bolt (7).

2. A mould-clamping platen according to Claim 1,
**characterised in that** the bolt (7) is disposed eccentrically at the sleeve (5).

3. A mould-clamping platen according to Claim 1 or 2,
**characterised in that** the sleeve (5) is aligned by its longitudinal direction (1) and the bolt (7) is aligned by its longitudinal direction (L) at right angles to each other and also in each case at right angles to the surface (1a) of the central region (2).

4. A mould-clamping platen according to one of Claims 1 to 3,
**characterised in that** the bolt (7) is fixed by its ends at the mutually facing inner sides of the mutually facing webs (3) and the sleeve (5) is fixed in the middle of the bolt (7) on its side facing the central region (2).

5. A mould-clamping platen according to Claim 4,
**characterised in that** the sleeve (5) penetrates into the bolt (7).

6. A mould-clamping platen according to Claim 4 or 5,
**characterised in that** the sleeves (5) with their outer surface closer to the central region (2) are separated via a transitional region (8) from the central region (2).

7. A mould-clamping platen according to one of Claims 1 to 6,
**characterised in that** the mould-clamping platen (1) with the central region (2) and the sleeves (5) is constructed in one piece as a steel casting.

8. A mould-clamping platen according to one of Claims 1 to 7,
**characterised in that** in each case rounded transitions (5a, 7a) are disposed between the web (3) and the bolt (7) and also between the bolt (7) and the sleeve (5).

9. A mould-clamping platen according to one of Claims 1 to 8,
**characterised in that** the substantially rectangular central region (2) is constructed from an interior rib structure with cover plates (2a) on both sides and the rib structure is constructed from a central ring (2b), to which Y-shaped connecting webs (2c) are connected in a star shape, and the ends of said connecting webs are connected via marginal webs (2d).

## Revendications

1. Plaque de fixation de moule d'une presse à injecter, en particulier pour matière plastique, avec des ouvertures pour le logement d'éléments de retenue et/ou de guidage, en forme de colonnes, d'une presse à injecter, sachant que la plaque de fixation de moule (1) se compose d'une zone centrale en forme de plaque (2) et de douilles (5) qui entourent les ouvertures (6) et sachant que les douilles (5) sont fixées à la zone centrale (2) par le biais d'éléments de liaison de telle manière que les éléments de liaison forment une articulation de flexion/torsion, **caractérisée en ce que** les éléments de liaison consistent en des entretoises (3) et en des chevilles (7), les entretoises (3) sont disposées sur la zone centrale (2) sensiblement rectangulaire dans ses zones angulaires (2a), s'étendent vers l'extérieur et limitent par paires une zone en forme de U (4), la cheville (7) est disposée entre les entretoises (3) et la douille (5) est fixée à la cheville (7).

2. Plaque de fixation de moule selon la revendication 1, **caractérisée en ce que** la cheville (7) est disposée excentriquement sur la douille (5).

3. Plaque de fixation de moule selon la revendication 1 ou 2, **caractérisée en ce que** la douille (5) avec son sens longitudinal (l) et la cheville (7) avec son sens longitudinal (L) sont orientées de manière orthogonale l'une par rapport à l'autre et chacune de manière orthogonale par rapport à la surface (1a) de la zone centrale (2).

4. Plaque de fixation de moule selon l'une des revendications 1 à 3, **caractérisée en ce que** la cheville (7) est fixée avec ses extrémités aux faces internes tournées l'une vers l'autre des entretoises (3) dirigées l'une vers l'autre et que la douille (5) au milieu de la cheville (7) est fixée sur la face de celle-ci tournée vers la zone centrale (2).

5. Plaque de fixation de moule selon la revendication 4, ' **caractérisée en ce que** la douille (5) s'enfonce dans la cheville (7).

6. Plaque de fixation de moule selon la revendication 4 ou 5, **caractérisée en ce que** les douilles (5) avec leur surface externe tournée vers la zone centrale (2) sont séparées de la zone centrale (2) par une zone de passage (8).

7. Plaque de fixation de moule selon l'une des revendications 1 à 6, **caractérisée en ce que** la plaque de fixation de moule (1) avec la zone centrale (2) et les douilles (5) est réalisée en une pièce comme élément en acier coulé.

8. Plaque de fixation de moule selon l'une des revendications 1 à 7, **caractérisée en ce que** des jonctions arrondies (5a, 7a) respectives sont disposées entre l'entretoise (3) et la cheville (7) ainsi qu'entre la cheville (7) et la douille (5).

9. Plaque de fixation de moule selon l'une des revendications 1 à 8, **caractérisée en ce que** la zone centrale (2) sensiblement rectangulaire consiste en une structure intérieure à nervures avec des plaques de recouvrement bilatérales (2a) et la structure à nervures se compose d'un anneau central (2b), auquel des entretoises de liaison (2c) en forme d'Y en étoile sont contiguës, entretoises de liaison dont les extrémités sont reliées par des entretoises terminales (2d).
